# EUROPÄISCHE PATENTANMELDUNG

(11) **EP 2 672 174 A1**
(43) Veröffentlichungstag der Anmeldung: **11.12.2013**
(21) Anmeldenummer: 12171321.8
(22) Anmeldetag: 08.06.2012
(51) Int. Cl.: F21V 13/04, F21V 7/00, F21Y 101/02

(54) **Beleuchtungsvorrichtung**

(71) Anmelder: Hurst + Schröder GmbH, 58791 Werdohl (DE)
(72) Erfinder: EIGLER, Norbert, 58540 Meinerzhagen (DE)
(74) Vertreter: Zenz

(57) **Zusammenfassung**

Bei einer Beleuchtungsvorrichtung (1) mit einem wannenförmig ausgebildeten und lichtundurchlässigen Reflektorelement (2), das von einer Bodenplatte (3) und einer die Bodenplatte (3) umrandenden Seitenwandung (4) gebildet ist, soll eine Lösung geschaffen werden, die auf konstruktiv einfache Weise und kostengünstig eine verbesserte Beleuchtungsvorrichtung bereitstellt, die sich insbesondere durch eine homogene Lichtverteilung bei gleichzeitig geringer Bauhöhe auszeichnet. Dies wird dadurch erreicht, dass ein einziges und einen im Wesentlichen halbkugelförmigen Kopf (11) aufweisendes Leuchtmittel (9) im Zentrum der Bodenplatte (3) angeordnet ist, wobei ein sich auf der Bodenplatte (3) abstützendes Lichtverteilungselement (12) den Kopf (11) umwölbt.

## Beschreibung

Die Erfindung richtet sich auf eine Beleuchtungsvorrichtung mit einem wannenförmig ausgebildeten und lichtundurchlässigen Reflektorelement, das von einer Bodenplatte und einer die Bodenplatte umrandenden Seitenwandung gebildet ist.

Eine solche Beleuchtungsvorrichtung ist beispielsweise aus der DE 20 2005 012 652 U1 bekannt und weist als Leuchtmittel eine Leistungs-LED bzw. High-Power LED bzw. eine Hochleistungs-Leuchtdiode auf, die im Zentrum eines Reflektorelementes auf einer Bodenplatte angeordnet ist und von einer Seitenwandung umgeben ist. Die Bauhöhe bzw. das Verhältnis von Breite zu Höhe des Reflektorelementes erscheint für eine Verwendung der bekannten Beleuchtungsvorrichtung als sogenannte Flächenleuchte zur Abstrahlung von Licht über eine große Fläche zwar geeignet. Jedoch hat ein solches lichtstarkes Leuchtmittel die nachteilige Angewohnheit, in der Mitte der Beleuchtungsfläche, also im Bereich, wo das Leuchtmittel angeordnet ist, stärker zu strahlen, was als sogenannter Hotspot-Effekt bezeichnet wird. Zusätzlich sind dabei Abschattungen in den Randbereichen der zu beleuchtenden Fläche wahrnehmbar.

Es ist jedoch erwünscht, dass die gesamte Beleuchtungsfläche inklusive des Bereiches, der die Beleuchtungsvorrichtung umgibt, in einer gleichmäßigen Helligkeitsdichte erscheint. Dies führt aber im Allgemeinen dazu, dass im Hinblick auf eine homogene Lichtverteilung eine relativ große Bauhöhe der Beleuchtungsvorrichtung bei geringer Breite in Kauf genommen werden muss, so dass die Beleuchtungsvorrichtung insgesamt eine relativ große Höhe aufweist, will man den Hotspot-Effekt und Abschattungen in den Randbereichen vermeiden. Dadurch eignet sich eine solche nicht für Anwendungen, bei denen eine geringe Einbautiefe gewünscht oder sogar nur vorhanden ist.

Eine Beleuchtungsvorrichtung der Eingangs bezeichneten Art ist aber auch zum Beispiel aus der DE 10 2005 059 198 A1 bekannt. Diese als Flächenleuchte ausgebildete

Beleuchtungsvorrichtung weist eine geringe Bauhöhe auf, wobei eine homogene Lichtverteilung mit Hilfe mehrerer als Leuchtdioden, lichtemittierende Dioden oder LEDs bezeichnete Leuchtmittel erzielt wird, die entsprechend auf der Bodenplatte des wannenförmigen Reflektorelementes angeordnet sind. Die Verwendung mehrerer auf der Bodenplatte angeordneter Leuchtmittel zur Erzielung einer homogenen Lichtverteilung wirkt sich jedoch nachteilig auf die Herstellungskosten aus und führt ferner zu einem aufwendigen konstruktiven Aufbau der Beleuchtungsvorrichtung.

Der Erfindung liegt daher die Aufgabe zugrunde eine Lösung zu schaffen, die auf konstruktiv einfache Weise und kostengünstig eine verbesserte Beleuchtungsvorrichtung bereitstellt, die sich insbesondere durch eine homogene Lichtverteilung bei gleichzeitig geringer Bauhöhe auszeichnet.

Bei einer Beleuchtungsvorrichtung der Eingangs bezeichneten Art wird die Aufgabe erfindungsgemäß dadurch gelöst, dass ein einziges und einen im Wesentlichen halbkugelförmigen Kopf aufweisendes Leuchtmittel im Zentrum der Bodenplatte angeordnet ist, wobei ein sich auf der Bodenplatte abstützendes Lichtverteilungselement den Kopf umwölbt.

Vorteilhafte und zweckmäßige Ausgestaltungen und Weiterbildungen der Erfindung ergeben sich aus den Unteransprüchen.

Durch die Erfindung wird eine Beleuchtungsvorrichtung zur Verfügung gestellt, die sich durch eine funktionsgerechte Konstruktion mit geringer Bauhöhe auszeichnet und einen einfachen sowie kostengünstigen Aufbau aufweist, wobei eine homogene Lichtverteilung bei Verwendung nur eines einzigen Leuchtmittels sicher gestellt ist. Eine solche Beleuchtungsvorrichtung eignet sich dann zur Verwendung in beispielsweise Kühlschränken. Sie kann aber auch bei Möbeln zur dekorativen und effizienten Beleuchtung, in Kraftfahrzeugen oder für Leitsysteme und Schaltelemente eingesetzt werden. Im Vergleich zu bekannten Lösungen, welche beispielsweise mehrere Leuchtmittel zur Erzielung einer homogenen Lichtverteilung verwenden, lässt sich die Beleuchtungsvorrichtung gemäß der vorliegenden Erfindung preiswert herstellen.

Zur Schaffung einer homogenen Lichtintensität des von der Beleuchtungsvorrichtung abgestrahlten Lichtes ist in Weiterbildung der Erfindung vorgesehen, dass das Lichtverteilungselement die Gestalt eines Pavillons mit einem als Kuppel ausgebildeten Dach aufweist, wobei das Dach sich an der Bodenplatte abstützende und/oder an der Bodenplatte angebrachte Stützen aufweist. Dadurch ist das Leuchtmittel zwischen Bodenplatte und Lichtverteilungselement angeordnet. Das Lichtverteilungselement, welches das Leuchtmittel umwölbt, sorgt dabei auf eine definierte wodurch das von dem Leuchtmittel abgestrahlte Licht vorteilhaft geführt ist. Insbesondere stellt das Lichtverteilungselement ein hohlzylinderförmiges Abschirmelement dar, welches das Leuchtmittel ummantelt, wobei das an der Bodenplatte angebrachte Stirnende des hohlzylinderförmigen Lichtverteilungselementes in Längsrichtung des Lichtverteilungselementes erstreckende Ausnehmungen aufweist, die als Lichtaustrittsöffnungen für das vom Leuchtmittel abgestrahlte Licht dienen.

Um den sogenannten Hotspot-Effekt zu vermeiden, sieht die Erfindung in weiterer Ausgestaltung vor, dass das Lichtverteilungselement aus einem Lichtkegel, der als ein Zentrumsabschnitt im Dach des Lichtverteilungselements kreiselförmig ausgebildet ist, und einem Lichtdiffusor, welcher die Stützen und den verbleibenden Abschnitt des Daches umfasst, gebildet ist. Der Lichtkegel ist daher so angeordnet, dass er eine Abstrahlung von Licht des Leuchtmittels senkrecht zur Bodenplatte verhindert. Zu diesem Zweck sieht die Erfindung in weiterer Ausgestaltung vor, dass der Lichtkegel aus einem lichtundurchlässigen Material und der Lichtdiffusor aus einem lichtdurchlässigen Material bestehen. Dadurch verhindert der das Dach des Lichtverteilungselements bildenden Lichtdiffusor eine mit Bezug auf die Bodenplatte senkrechte Abstrahlung von Licht, was ohne lichtundurchlässigen Lichtkegel sonst zu dem sogenannten Hotspot-Effekt führen würde.

Gemäß den vorstehenden Ausführungen weist das Lichtverteilungselement zwei unterschiedliche Eigenschaften für das von dem Leuchtmittel abgestrahlte Licht auf. Zum einen verhindert der lichtundurchlässige Lichtkegel den Hotspot-Effekt und zum anderen wird die Lichtintensität des von dem Leuchtmittel abgestrahlten Lichtes bei seinem Durchtritt durch das Material des Lichtdiffusors gemindert. Im Hinblick auf eine besonders kostengünstige und effiziente Herstellung des Lichtverteilungselementes sieht die Erfindung vor, dass das Lichtverteilungselement einstückig ausgeformt und aus einem Zwei-Komponenten-Kunststoff gebildet ist, so dass der Lichtkegel in den Lichtdiffusor eingebettet ist. Auf diese Weise ist es möglich, dass das aus Lichtkegel und Lichtdiffusor bestehende Lichtverteilungselement in einem einzigen Fertigungsschritt hergestellt werden kann.

Für eine kostengünstige und unkomplizierte Herstellung der Beleuchtungsvorrichtung ist es weiterhin von Vorteil, wenn das Lichtverteilungselement rotationssymmetrisch ausgebildet ist und die Stützen kreisabschnittsförmige Segmente sind, die zwischen der Seitenwandung und dem Leuchtmittel angeordnet sind. Das Lichtverteilungselement verhindert also nicht nur den Hotspot-Effekt, der sich bei senkrecht zur Bodenplatte verlaufender Abstrahlung des Lichts des Leuchtmittels ergeben würde. Vielmehr sorgt das Lichtverteilungselement bei dem parallel zur Bodenplatte abgestrahlten Licht dafür, dass dieses keine Abschattungen in den Randbereichen bewirkt. Zu diesem Zweck sind die Stützen entsprechend zu der Wandung und den Ecken des Reflektorelementes angeordnet. Eine solche Anordnung kann dann beispielsweise so definiert sein, dass ein einen Kreisbogen zwischen zwei benachbarten und kreisabschnittsförmigen Segmenten definierender Mittelpunktswinkel wenigstens 45°, aber höchstens 60° beträgt. Der Mittelpunktswinkel definiert hierbei den Freiraum zwischen den zwei benachbarten Segmenten bzw. Stützen, also die jeweilige Breite der Lichtaustrittsöffnungen, und gibt damit den Abschnitt an, durch welchen das abgestrahlte Licht ungehindert seitlich, d.h. parallel zur Bodenplatte, strahlen kann, wohingegen die Lichtintensität des Lichtes, welches durch die Stützen hindurchtritt, verändert wird.

In Ausgestaltung der Erfindung ist weiter vorgesehen, dass das wannenförmige Reflektorelement quadratisch ausgebildet ist und jeder Seitenfläche der Seitenwandung eine von insgesamt vier Stützen des Lichtverteilungselementes zugeordnet ist, wobei sich die Stützen im Wesentlichen parallel zu der entsprechenden Seitenfläche der Seitenwandung erstrecken. Durch die quadratische Form des Reflektorelementes können mehrere Beleuchtungseinrichtungen nebeneinanderliegend zur Beleuchtung einer gewünschten Fläche verwendet werden, wobei auch eine nachträgliche Vergrößerung oder Verkleinerung der zu beleuchtenden Fläche durch die quadratische Form möglich ist. Dabei wird durch die besondere Anordnung der Stützen, die sich parallel zu den geradlinig verlaufenden Seitenflächen der Seitenwandung erstrecken und damit eckenfern auf der Bodenplatte angeordnet sind, eine homogene Lichtverteilung ohne Abschattungen in den Ecken oder Seitenbereichen erzielt.

Um ferner den vorstehend näher beschriebenen Hotspot-Effekt zu unterbinden, ist in weiterer Ausgestaltung der Erfindung vorgesehen, dass der Durchmesser des lichtundurchlässigen Lichtkegels des Lichtverteilungselements zumindest dem 2-fachen, aber maximal dem 3-fachen des Durchmessers des Leuchtmittels entspricht.

Hinsichtlich einer homogenen Lichtverteilung ist es günstig, wenn die Breite des Reflektorelementes wenigstens dem 1,5-fachen, aber maximal dem 2-fachen des Durchmessers des rotationssymmetrisch ausgebildeten Lichtverteilungselementes entspricht. Ebenso günstig ist es für eine homogene Lichtverteilung, wenn die Breite des Reflektorelementes wenigstens dem 6-fachen, aber maximal dem 7-fachen der Höhe des Lichtverteilungselementes entspricht. Ein Optimum im Hinblick auf eine homogene Lichtverteilung ist insbesondere dann gegeben, wenn die Höhe des Reflektorelementes wenigstens dem 1,2-fachen, aber maximal dem 2-fachen der Höhe des Lichtverteilungselementes entspricht.

Die homogene Verteilung des Lichtes kann ferner dadurch erhöht werden, dass die von dem Rand der Seitenwandung gebildete Reflektoröffnung von einem lichtdurchlässigen Abdeckelement überdeckt wird. Ein geeignetes, diffus lichtstreuendes Kunststoffmaterial für das Abdeckelement kann zusätzlich zu den vorstehenden Maßnahmen eine gleichmäßige Auskopplung des Lichtes über der gesamten Fläche des Abdeckelementes begünstigen, wobei dadurch zusätzlich die Bauhöhe der Beleuchtungsvorrichtung gegebenenfalls verringert werden kann.

Um das auf die Seitenwandung abgestrahlte Licht des Leuchtmittels vom Reflektorelement weg umzulenken, ist in Ausgestaltung der Erfindung vorgesehen, dass sich die Seitenwandung unter einem Öffnungswinkel von wenigstens 12,5°, aber maximal von 25° mit Bezug auf die Bodenplatte von deren Zentrum weg weisend erstreckt.

Schließlich ist in weiterer Ausgestaltung der Erfindung vorgesehen, dass das Leuchtmittel eine Leuchtdiode ist, die sich mit ihrem Kopf durch eine Durchgangsöffnung in der Bodenfläche des Reflektorelementes hindurch in das Innere des Reflektorelementes erstreckt. Dabei kann die Leuchtdiode auf einer bedruckten Leiterplatte angeordnet sein, wobei die Leiterplatte dann zusätzlich der Steuerung der Leuchtdiode (LED) und gegebenenfalls der Kühlung der Leuchtdiode dienen kann.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhaft ein bevorzugtes Ausführungsbeispiel der Erfindung dargestellt ist. In der Zeichnung zeigt:
Figur 1 eine perspektivische Ansicht auf eine erfindungsgemäße Beleuchtungsvorrichtung,
Figur 2 eine perspektivische Einzelteildarstellung der Beleuchtungsvorrichtung aus Figur 1,
Figur 3 ein aus Lichtdiffusor und Lichtkegel bestehendes Lichtverteilungselement, das im Inneren der Beleuchtungsvorrichtung angeordnet und befestigt ist,
Figur 4 eine perspektivische Darstellung eines wannenförmigen Reflektorelementes der in Figur 1 dargestellten Beleuchtungsvorrichtung und einem im Zentrum des Reflektorelementes angeordneten Leuchtmittel,
Figur 5 das Reflektorelement aus Figur 4 mit dem über das Leuchtmittel gewölbten Lichtverteilungselement aus Figur 3,
Figur 6 eine durch das Zentrum der Beleuchtungsvorrichtung aus Figur 1 verlaufende, seitliche Schnittansicht, und
Figur 7 eine geschnittene Draufsicht auf die Beleuchtungsvorrichtung aus Figur 1.

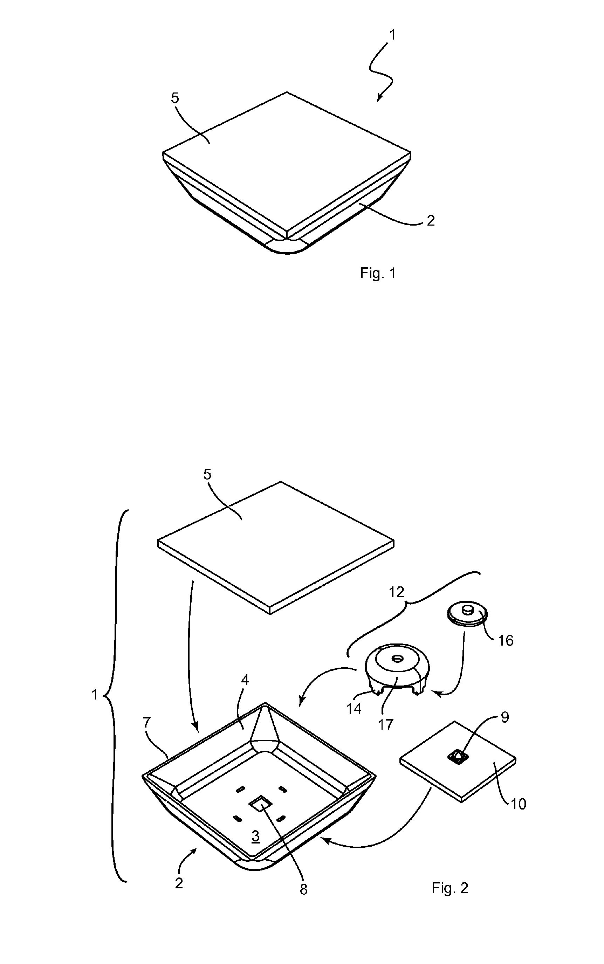

In Figur 1 ist eine Beleuchtungsvorrichtung 1 in Perspektivansicht dargestellt. Die Beleuchtungsvorrichtung 1 weist eine quadratische Form bzw. Gestalt auf, wodurch es möglich ist, mehrere Beleuchtungsvorrichtungen 1 nebeneinanderliegend anzuordnen bzw. aneinanderzureihen, um eine großen Leuchtfläche zu gestalten. Die quadratische Form erlaubt daher eine nachträgliche Vergrößerung oder auch Verkleinerung der zu schaffenden Leuchtfläche oder auch einer zu beleuchtenden Fläche, so dass sich die Beleuchtungsvorrichtung 1 für einen flexiblen Einsatz bestens eignet.

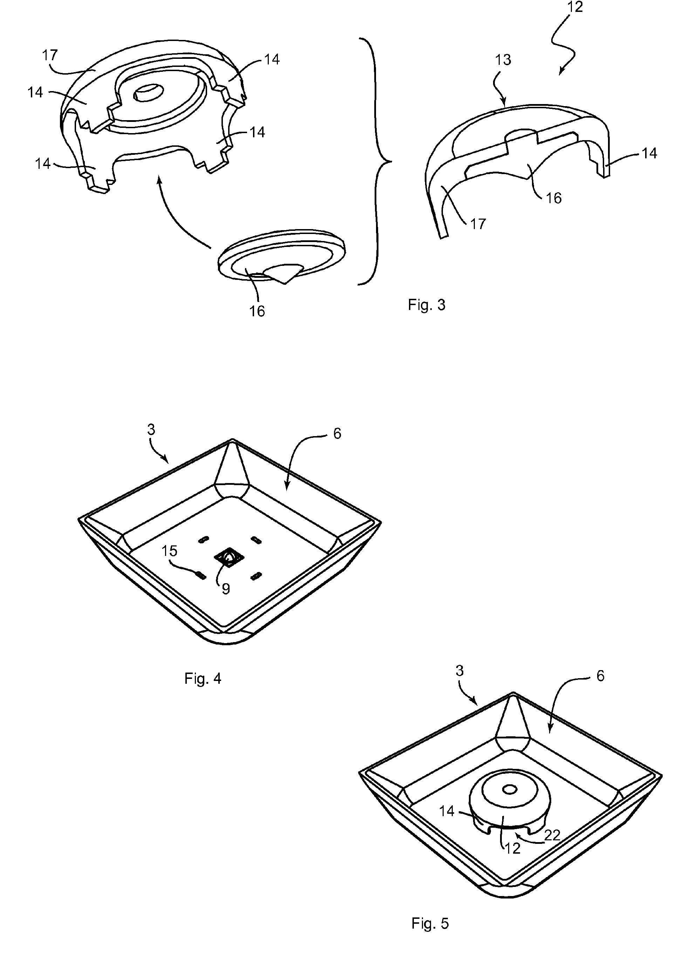

Die Beleuchtungsvorrichtung 1, die in Figur 2 in einer Einzelteildarstellung gezeigt ist, umfasst ein Reflektorelement 2, welches wannenförmig ausgebildet ist. Die wannenförmige Gestalt des Reflektorelementes 2 ist durch eine im Ausführungsbeispiel quadratische Bodenplatte 3 und einer Seitenwandung 4, die die Bodenplatte 3 umrandet, gebildet. Das Reflektorelement 2 ist hierbei aus einem lichtundurchlässigen Material hergestellt und auf seiner Innenseite reflektierend ausgebildet und/oder ggf. beschichtet, so dass auf die Seitenwandung 4 auftreffendes Licht im Wesentlichen von der Bodenplatte 3 wegweisend umgelenkt und abgestrahlt wird. Auf der Seitenwandung 4 des wannenförmigen Reflektorelementes 2 liegt ein lichtdurchlässiges Abdeckelement 5 auf und überdeckt die Reflektoröffnung 6 (angedeutet in den Figuren 4 bis 6), welche von dem umlaufenden Rand 7 der Seitenwandung 4 gebildet ist.

Wie beispielsweise aus Figur 2 ersichtlich ist, weist die Bodenplatte 3 des Reflektorelementes 2 in ihrem Zentrum eine Durchgangsöffnung 8 auf, durch die hindurch ein Leuchtmittel 9 in das Innere der zusammengebauten Beleuchtungsvorrichtung 1 ragt. Dabei ist in dem gezeigten Ausführungsbeispiel das Leuchtmittel 9 als Leuchtdiode bzw. LED ausgeführt und derart auf einer Leiterplatte 10 angebracht, dass der halbkugelförmige Kopf 11 des Leuchtmittels 9 im Inneren der Beleuchtungsvorrichtung 1 angeordnet ist und dort im Betrieb Licht senkrecht und parallel zur Bodenplatte 3 abstrahlt. Die Leiterplatte 10, die im zusammengesetzten Zustand der Beleuchtungsvorrichtung 1 auf der Unterseite der Bodenplatte 3 angebracht ist, kann als Kühlkörper für das Leuchtmittel 9 fungieren oder einen Kühlkörper für das Leuchtmittel 9 aufweisen.

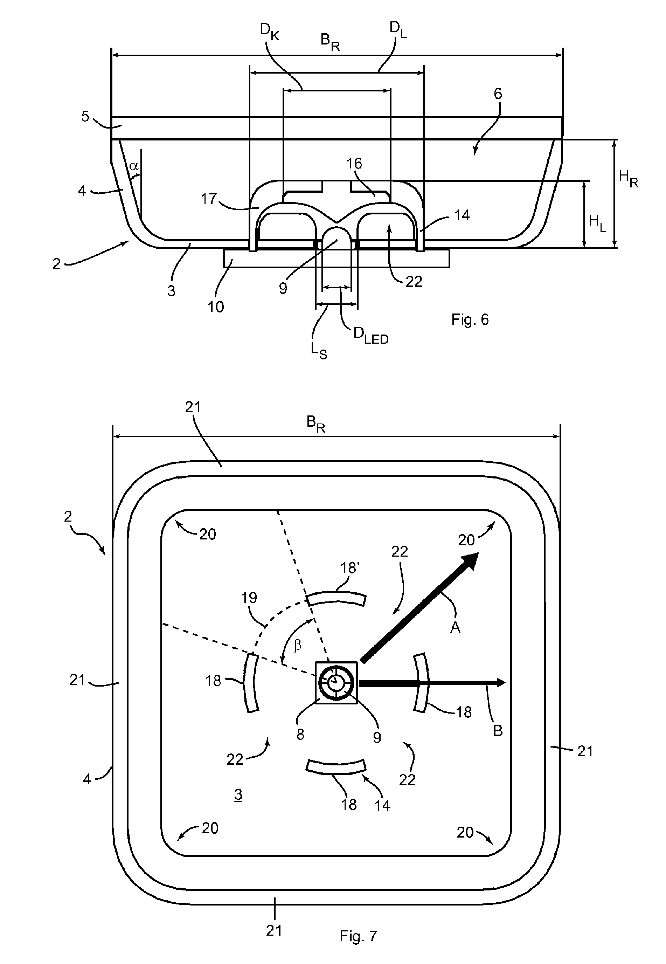

Im Gegensatz zu den aus dem Stand der Technik bekannten Beleuchtungsvorrichtungen weist die erfindungsgemäße Beleuchtungsvorrichtung 1 nur ein einziges Leuchtmittel 9 auf und gewährleistet dennoch eine einheitliche und homogene Lichtverteilung des aus dem Abdeckelement 5 austretenden Lichtes. Für eine homogene Lichtverteilung ist erfindungsgemäß ein Lichtverteilungselement 12 vorgesehen, das sich auf der Bodenplatte 3 des Reflektorelementes 2 abstützt bzw. auf der Bodenplatte 3 angebracht ist. Das Lichtverteilungselement 12 umwölbt den halbkugelförmigen Kopf 11 des Leuchtmittels 9, wie beispielsweise aus Figuren 5 und 7 oder der Schnittansicht aus Figur 6 ersichtlich ist.

Das Lichtverteilungselement 12, welches detailliert in Figur 3 sowohl in einer Einzelteildarstellung (linke Darstellungen neben der geschweiften Klammer) als auch in einer Zusammenbauansicht im Schnitt (rechte Darstellung) gezeigt ist, weist die Gestalt eines Pavillons mit einem als Kuppel ausgebildeten Dach 13 auf. An dem Abschnitt des Daches 13 sind Stützen 14 angeformt, mit denen sich das Lichtverteilungselement 12 an der Bodenplatte 3 abstützt und die zur Anbringung des Lichtverteilungselementes 12 in entsprechende Ausnehmungen 15 in der Bodenplatte 3 des Reflektorelementes 2 einsteckbar sind. Wie insbesondere den Figuren 2 und 3 zu entnehmen ist, ist das Lichtverteilungselement 12 aus einem Lichtkegel 16 und einen Lichtdiffusor 17 gebildet. Dabei ist der Lichtkegel 16 kreiselförmig und als ein Zentrumsabschnitt des Daches 13 des Lichtverteilungselementes 12 ausgebildet, wohingegen der Lichtdiffusor 17 die Stützen 14 und den verbleibenden Abschnitt des Daches 13, der unter anderem eine Art Aufnahme für den Lichtkegel 16 aufweist, umfasst. Der Lichtkegel 16 besteht aus einem lichtundurchlässigen Material, wohingegen der Lichtdiffusor 17 aus einem lichtdurchlässigen Material besteht. Jedoch handelt es sich in beiden Fällen bei dem verwendeten Material um einen, vorzugsweise thermoplastischen, Kunststoff, wie beispielsweise Polycarbonat (PC) oder Polybutylenterephthalat (PBT). Diese Materialwahl eröffnet im Hinblick auf eine effiziente und kostengünstige Herstellung die Möglichkeit, das Lichtverteilungselement 12 mit Hilfe eines Mehrkomponenten-Spritzgießens herzustellen, so dass der Lichtkegel 16 in den Lichtdiffusor 17 eingebettet ist und beide Teile ein einstückiges Lichtverteilungselement 12 aus einem Zwei-Komponenten-Kunststoff bilden.

Das in den Figuren (siehe beispielsweise Figuren 3) dargestellte Lichtverteilungselement 12 ist rotationssymmetrisch ausgebildet, wobei die Stützen 14 kreisabschnittsförmige Segmente 18 beschreiben, die zwischen der Seitenwandung 4 und dem Leuchtmittel 9 angeordnet sind. Das Lichtverteilungselement 12 entspricht einem einseitig offenen und hohlen Kreiszylinder, in dessen Inneren das Leuchtmittel 9 angeordnet ist, wobei das kreiszylinderförmige Lichtverteilungselement 12 gleichmäßig über seinen Umfang verteilte Lichtaustrittsöffnungen 22 aufweist, durch die das vom Leuchtmittel 9 abgestrahlte Licht sich im Wesentlichen nur in Richtung der Ecken 20 des Reflektorelementes 2 ausbreiten kann. Die Wandbereiche des Lichtverteilungselementes 12 neben den Lichtaustrittsöffnungen 22 beschreiben die Stützen 14, mit denen sich das Lichtverteilungselement 12 an der Bodenplatte 3 abstützt bzw. mit denen das Lichtverteilungselement 12 in den Ausnehmungen 15 der Bodenplatte 3 lösbar befestigt ist.

Um das von dem einzigen Leuchtmittel 9 abgestrahlte Licht im Inneren der Beleuchtungsvorrichtung 1 homogen zu verteilen, damit von dem lichtdurchlässigen Abdeckelement 5 eine verhältnismäßig gleichmäßige Lichtintensität abgestrahlt wird, weisen die Stützen 14 bzw. die kreisabschnittsförmigen Segmente 18 eine definierte Form und Anordnung auf. Ein Mittelpunktswinkel β (siehe Figur 7), der einen Kreisbogen 19 zwischen zwei benachbarten und kreisabschnittsförmigen Segmenten 18 und 18' definiert, beträgt 55°. Der Winkel β beschreibt demnach eine jeweilige Lichtaustrittsöffnung 22 (siehe zum Beispiel Figur 7) und damit den seitlichen Bereich, durch den das vom Leuchtmittel 9 abgestrahlte Licht ungehindert sich in Richtung einer Ecke 20 des Reflektorelementes 2 ausbreiten kann, wohingegen das Licht außerhalb der Lichtaustrittsöffnungen 22 durch das lichtdurchlässige Material der Stützen 14 hindurchtreten muss, bevor es weiter in Richtung der Seitenwandung 4 gelangt. Der Winkel bzw. Mittelpunktswinkel β ist hierbei vom Material des Lichtdiffusors 17, der verwendeten Lichtintensität des Leuchtmittels 9 und von der Breite B_{R} des Reflektorelementes 2 abhängig, so dass der Mittelpunktswinkel β alternativ im Bereich zwischen 45° und 60° liegen kann.

Wie vorstehend bereits angesprochen, ist das wannenförmige Reflektorelement 2 bei dem dargestellten Ausführungsbeispiel quadratisch ausgebildet, wobei jeder der vier geradlinig verlaufenden Seitenflächen 21 jeweils eine der vier Stützen 14 bzw. jeweils einem kreisabschnittsförmiges Segment 18 zugeordnet ist, so dass ein direkter Lichteinfall von parallel zur Bodenplatte 3 verlaufenden Lichtstrahlen auf einen zentralen Abschnitt der geradlinig verlaufenden Seitenflächen 21 vermieden wird, was Abschattungen im Bereich der Seitenwandung 4 verhindern und einer homogenen Lichtverteilung auf dem Abdeckelement 5 zu Gute kommt. Auf diese Weise sind die Stützen 14 bzw. kreisabschnittsförmigen Segmente 18 derart auf der Bodenplatte 3 angeordnet, dass sich das vom halbkugelförmigen Kopf 11 des Leuchtmittels 9 abgestrahlte Licht ungehindert in Richtung der Ecken 20 des Reflektorelementes 2 ausbreiten kann (siehe Pfeil A in Figur 7) und dort senkrecht zu der Bodenplatte 3 in Richtung des Abdeckelementes 5 abgelenkt wird, wohingegen das in Richtung des zentralen Bereichs von einer der vier geradlinig verlaufenden Seitenflächen 21 abgestrahlte Licht des Leuchtmittels 9 die Seitenflächen 21 erst nach Durchtritt durch den lichtdurchlässigen Bereich der Stützen 14 hindurch mit verminderter Lichtintensität erreicht (siehe Pfeil B in Figur 7). Bei der insbesondere in Figur 7 dargestellten Beleuchtungsvorrichtung 1 erreicht das vom Leuchtmittel 9 in Richtung der Ecken 20 abgestrahlte Licht (Pfeil A) aufgrund der im Vergleich zur geradlinigen Seitenfläche 21 größeren Distanz mit leicht verminderter Lichtintensität die Ecken 20. Das in Richtung und im Wesentlichen senkrecht zu der Seitenfläche 21 abgestrahlte Licht würde ohne das Lichtverteilungselement 12 eine höhere Lichtintensität aufweisen als das in die Ecken 20 gelangende Licht, so dass im Bereich der Ecken 20 Abschattungen und entlang des Randes 7 der Seitenwandung 4 unterschiedliche Lichtintensitäten vorherrschen würden. Es ist ferner darauf hinzuweisen, dass ohne das Lichtverteilungselement 12 und dessen Lichtkegel 16 zusätzlich der Hotspot-Effekt zum Tragen kommen und das Zentrum der Beleuchtungsvorrichtung 1 die größte Lichtintensität aufweisen würde. Daher ist das Lichtverteilungselement 12 dazu bestimmt und ausgelegt, eine homogene Lichtverteilung auf der gesamten Fläche des Abdeckelementes 5 zu erzielen. Zu diesem Zweck bewirkt das Lichtverteilungselement 12, dass die Lichtverteilung bzw. Lichtintensität in bestimmten Bereichen des Reflektorelementes 2 reduziert wird, um insgesamt die Lichtintensität auf dem Abdeckelement 5 zu vergleichmäßigen. Zur Vergleichmäßigung trägt bei, dass der Lichtkegel 16 aus einem lichtundurchlässigen Material gebildet ist, um den Hotspot-Effekt direkt oberhalb des Leuchtmittels 9 zu verhindern. Die aus einem lichtdurchlässigen Material gebildeten und eckenfern auf der Bodenplatte 3 des Reflektorelementes 2 angeordneten Stützen 14 des Lichtdiffusors 17 blockieren hingegen nicht den Durchtritt des abgestrahlten Lichtes, sondern sorgen beim Durchtritt durch das Material der Stützen 14 bzw. der kreisabschnittsförmigen Segmente 18 für eine Reduzierung der Lichtintensität, wie durch den Pfeil B in Figur 7 illustriert ist. Dabei erstrecken sich die Stützen 14 im Wesentlichen parallel zu der entsprechenden, geradlinig verlaufenden Seitenfläche 21 der Seitenwandung 4 und sind damit eckenfern auf der Bodenplatte 3 angeordnet.

Zur Vermeidung des Hotspot-Effektes ist mit Bezug auf die Figur 6 der Lichtkegel 16 des Lichtverteilungselementes 12 so dimensioniert, dass sein Durchmesser D_{K} dem 1,45-fachen des Durchmessers D_{LED} des Leuchtmittels 9 entspricht. Denkbar ist aber auch, dass der Durchmesser D_{K} des Lichtkegels 16 zumindest dem 2-fachen, aber maximal dem 3-fachen des Durchmessers D_{LED} des Leuchtmittels 9 entspricht. Hinsichtlich einer homogenen Lichtintensität auf dem Abdeckelement 5 beträgt bei dem in den Figuren dargestellten Ausführungsbeispiel das Verhältnis von Breite B_{R} des Reflektorelementes 2 zu dem Durchmessers D_{L} des rotationssymmetrisch ausgebildeten Lichtverteilungselementes 12 B_{R} / D_{L} = 2,6, wobei auch ein anderes Verhältnis denkbar ist, beispielsweise derart, dass die Breite B_{R} des Reflektorelementes 2 wenigstens dem 1,5-fachen, aber maximal dem 2-fachen des Durchmessers D_{L} des rotationssymmetrisch ausgebildeten Lichtverteilungselementes 12 entspricht. Gleichfalls nicht unwesentlich im Hinblick auf eine homogene Lichtverteilung bei gleichzeitig flachem Aufbau der Beleuchtungsvorrichtung 1 ist das Verhältnis von Breite B_{R} des Reflektorelementes 2 zur Höhe H_{L} des Lichtverteilungselementes 12, welches in dem dargestellten Ausführungsbeispiel 2,6 beträgt. In alternativen Abwandlungen ist es aber auch denkbar, dass die Breite B_{R} des Reflektorelementes 2 wenigstens dem 6-fachen, aber maximal dem 7-fachen der Höhe H_{L} des Lichtverteilungselementes 12 entspricht. Schließlich beträgt das Verhältnis der Höhe H_{R} des Reflektorelementes 2 zu der Höhe H_{L} des Lichtverteilungselementes 12 in dem vorliegenden Ausführungsbeispiel 1,6, wobei es auch vorstellbar ist, dass die Höhe H_{R} des Reflektorelementes 2 wenigstens dem 1,2-fachen, aber maximal dem 2-fachen der Höhe H_{L} des Lichtverteilungselementes 12 entspricht. Um die Lichtverteilung seitlich vom halbkugelförmigen Kopf 11 des Leuchtmittels 9 zu vergleichmäßigen, beträgt das Verhältnis von seitlicher Erstreckung L_{S} der Stützen 14 zu Durchmesser D_{LED} des Leuchtmittels 9 L_{S} / D_{LED} =1,45, wobei alternativ ein Verhältnis im Bereich 1,3 bis 1,6 gewählt werden kann. Angemerkt sei schließlich, dass der Öffnungswinkel α der Seitenwandung 4 mit Bezug auf die Bodenplatte 3 ca. 17° beträgt, wobei auch ein davon abweichender Öffnungswinkel α zwischen wenigstens 12,5° und maximal 25° mit Bezug auf die Bodenplatte 3 denkbar sind.

Zusammenfassend ist mit der vorliegenden Erfindung eine Beleuchtungsvorrichtung 1 bereitgestellt, welche sich durch eine flache Bauform bei gleichzeitig homogener Lichtverteilung auf der Abstrahlfläche auszeichnet, wobei nur ein einziges Leuchtmittel 9 in Form einer LED verwendet wird. Dies ist dadurch möglich, weil das Leuchtmittel 9 von dem Lichtverteilungselement 12 umwölbt ist, so dass der lichtdurchlässige Teil des Lichtverteilungselementes 12 die Lichtintensität mindert und der lichtundurchlässige Teil des Lichtverteilungselementes 12 den sogenannten Hotspot-Effekt verhindert. Das ungehindert parallel zu der Bodenplatte 3 durch die Stützen 14 hindurch in Richtung der Ecken 20 gelangende Licht des Leuchtmittels 9 wird in seiner Lichtintensität von dem Lichtverteilungselement 12 nicht beeinflusst, wobei jedoch die Intensität zu den Ecken abnimmt. Mit anderen Worten weist das innenliegende Lichtverteilungselement 12 speziell berechnete Lichtaustrittsöffnungen 22 (siehe Figuren 5, 6 und 7) zur homogenen Lichtverteilung auf, wobei eine flache Bauform der als LED-Leuchte ausgebildeten Beleuchtungsvorrichtung 1 gewahrt wird. Denkbar ist hierbei die Verwendung einer High-Power LED als Leuchtmittel 9, um eine homogene Ausleuchtung der gesamten quadratischen Fläche des Abdeckelementes 5 zu erzielen. Dabei ist das Leuchtmittel 9 mit Abstand unterhalb des Lichtkegels 16 angeordnet. Es sind ferner mehrere erfindungsgemäße Beleuchtungsvorrichtungen 1 modular anreihbar zu einer größeren Fläche, die beleuchtet werden soll. Dabei kann mit Ausnahme des Leuchtmittels 9 die Beleuchtungsvorrichtung 1 nur aus Kunststoff kostengünstig gebildet sein, so dass kein Metall verwendet werden muss, um ein Gehäuse für das Leuchtmittel 9 bereitzustellen, dass eine homogene Lichtverteilung aufweist.

Die vorstehend beschriebene Erfindung ist selbstverständlich nicht auf die beschriebenen und/oder dargestellten Ausführungsformen beschränkt. Es ist ersichtlich, dass an den in der Zeichnung dargestellten Ausführungsformen zahlreiche, dem Fachmann entsprechend der beabsichtigten Anwendung naheliegende Abänderungen vorgenommen werden können, ohne dass dadurch der Bereich der Erfindung verlassen wird. Dabei gehört zur Erfindung alles dasjenige, was in der Beschreibung enthalten und/oder in der Zeichnung dargestellt ist, einschließlich dessen, was abweichend von den konkreten Ausführungsbeispielen für den Fachmann naheliegt.

## Patentansprüche

1. Beleuchtungsvorrichtung (1) mit einem wannenförmig ausgebildeten und lichtundurchlässigen Reflektorelement (2), das von einer Bodenplatte (3) und einer die Bodenplatte (3) umrandenden Seitenwandung (4) gebildet ist,
**dadurch gekennzeichnet, dass**
ein einziges und einen im Wesentlichen halbkugelförmigen Kopf (11) aufweisendes Leuchtmittel (9) im Zentrum der Bodenplatte (3) angeordnet ist, wobei ein sich auf der Bodenplatte (3) abstützendes Lichtverteilungselement (12) den Kopf (11) umwölbt.

2. Beleuchtungsvorrichtung (1) nach Anspruch 1, **dadurch gekennzeichnet, dass** das Lichtverteilungselement (12) die Gestalt eines Pavillons mit einem als Kuppel ausgebildeten Dach (13) aufweist, wobei das Dach (13) sich an der Bodenplatte (3) abstützende und/oder an der Bodenplatte (3) angebrachte Stützen (14) aufweist.

3. Beleuchtungsvorrichtung (1) nach Anspruch 2, **dadurch gekennzeichnet, dass** das Lichtverteilungselement (12) aus einem Lichtkegel (16), der als ein Zentrumsabschnitt im Dach (13) des Lichtverteilungselementes (12) kreiselförmig ausgebildet ist, und einem Lichtdiffusor (17), welcher die Stützen (14) und den verbleibenden Abschnitt des Daches (13) umfasst, gebildet ist.

4. Beleuchtungsvorrichtung (1) nach Anspruch 3, **dadurch gekennzeichnet, dass** der Lichtkegel (16) aus einem lichtundurchlässigen Material und der Lichtdiffusor (17) aus einem lichtdurchlässigen Material bestehen.

5. Beleuchtungsvorrichtung (1) nach Anspruch 3 oder 4, **dadurch gekennzeichnet, dass** das Lichtverteilungselement (12) einstückig ausgeformt und aus einem Zwei-Komponenten-Kunststoff gebildet ist, so dass der Lichtkegel (16) in den Lichtdiffusor (17) eingebettet ist.

6. Beleuchtungsvorrichtung (1) nach einem der Ansprüche 2 bis 5, **dadurch gekennzeichnet, dass** das Lichtverteilungselement (12) rotationssymmetrisch ausgebildet ist und die Stützen (14) kreisabschnittsförmige Segmente (18) sind, die zwischen der Seitenwandung (4) und dem Leuchtmittel (9) angeordnet sind.

7. Beleuchtungsvorrichtung (1) nach Anspruch 6, **dadurch gekennzeichnet, dass** ein einen Kreisbogen (19) zwischen zwei benachbarten und kreisabschnittsförmigen Segmenten (18, 18') definierender Mittelpunktswinkel (β) wenigstens 45°, aber höchstens 60° beträgt.

8. Beleuchtungsvorrichtung (1) nach einem der Ansprüche 2 bis 7, **dadurch gekennzeichnet, dass** das wannenförmige Reflektorelement (2) quadratisch ausgebildet ist und jeder Seitenfläche (21) der Seitenwandung (4) eine von insgesamt vier Stützen (14) des Lichtverteilungselementes (12) zugeordnet ist, wobei sich die Stützen (14) im Wesentlichen parallel zu der entsprechenden Seitenfläche (21) der Seitenwandung (4) erstrecken.

9. Beleuchtungsvorrichtung (1) nach einem der Ansprüche 2 bis 8, **dadurch gekennzeichnet, dass** der Durchmesser (D_{K}) des Lichtkegels (16) des Lichtverteilungselements (12) zumindest dem 2-fachen, aber maximal dem 3-fachen des Durchmessers (D_{LED}) des Leuchtmittels (9) entspricht.

10. Beleuchtungsvorrichtung (1) nach einem der vorhergehenden Ansprüche, **dadurch gekennzeichnet, dass** die Breite (B_{R}) des Reflektorelementes (2) wenigstens dem 1,5-fachen, aber maximal dem 2-fachen des Durchmessers (D_{L}) des rotationssymmetrisch ausgebildeten Lichtverteilungselementes (12) entspricht.

11. Beleuchtungsvorrichtung (1) nach einem der vorhergehenden Ansprüche, **dadurch gekennzeichnet, dass** die Breite (B_{R}) des Reflektorelementes (2) wenigstens dem 6-fachen, aber maximal dem 7-fachen der Höhe (H_{L}) des Lichtverteilungselementes (12) entspricht.

12. Beleuchtungsvorrichtung (1) nach einem der vorhergehenden Ansprüche, **dadurch gekennzeichnet, dass** die Höhe (H_{R}) des Reflektorelementes (2) wenigstens dem 1,2-fachen, aber maximal dem 2-fachen der Höhe (H_{L}) des Lichtverteilungselementes (12) entspricht.

13. Beleuchtungsvorrichtung (1) nach einem der vorhergehenden Ansprüche, **dadurch gekennzeichnet, dass** die von dem Rand (7) der Seitenwandung (4) gebildete Reflektoröffnung (6) von einem lichtdurchlässigen Abdeckelement (5) überdeckt ist.

14. Beleuchtungsvorrichtung (1) nach einem der vorhergehenden Ansprüche, **dadurch gekennzeichnet, dass** sich die Seitenwandung (4) unter einem Öffnungswinkel (α) von wenigstens 12,5°, aber maximal von 25° mit Bezug auf die Bodenplatte (3) von deren Zentrum wegweisend erstreckt.

15. Beleuchtungsvorrichtung (1) nach einem der vorhergehenden Ansprüche, **dadurch gekennzeichnet, dass** das Leuchtmittel (9) eine Leuchtdiode ist, die sich mit ihrem Kopf (11) durch eine Durchgangsöffnung (8) in der Bodenplatte (3) des Reflektorelementes (2) hindurch in das Innere der Beleuchtungsvorrichtung (1) erstreckt.
